(19) Europäisches Patentamt
European Patent Office
Office européen des brevets

(11) EP 2 131 706 B1

(12) **EUROPEAN PATENT SPECIFICATION**

(45) Date of publication and mention
of the grant of the patent:
**05.08.2015 Bulletin 2015/32**

(21) Application number: **07754706.5**

(22) Date of filing: **30.03.2007**

(51) Int Cl.:
*A47J 36/38* (2006.01)     *A47J 37/12* (2006.01)

(86) International application number:
**PCT/US2007/008222**

(87) International publication number:
**WO 2008/121111 (09.10.2008 Gazette 2008/41)**

(54) **FRYER DEVICE**

FRITEUSE

DISPOSITIF DE FRITEUSE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **29.03.2007 US 693143**

(43) Date of publication of application:
**16.12.2009 Bulletin 2009/51**

(73) Proprietor: **Spinfry, INC.**
**Lincoln, Rhode Island 02865 (US)**

(72) Inventors:
• **FOSTER, Paul Lincoln**
**Lincoln, Rhode Island 02865 (US)**

• **THORNOCK, Del Moffat**
**Concord, California 94518 (US)**

(74) Representative: **Hargreaves, Timothy Edward et al**
**Marks & Clerk LLP**
**Atholl Exchange**
**6 Canning Street**
**Edinburgh EH3 8EG (GB)**

(56) References cited:
WO-A-01/91580          FR-A- 2 846 218
GB-A- 1 337 547        GB-A- 2 295 768
US-A- 3 827 985        US-A- 5 611 265
US-A1- 2004 060 456

**Description**

**Field of Invention**

The present invention relates to a fryer device. More specifically, the present invention relates to a fryer device that is capable of removing oil content from fried food.

**Background of the Invention**

A popular method of cooking many food items is to fry or deep fry them. A brief list of foods that may be deep fried included french fries, potato chips, chicken, pork, beef, candy bars, ice cream, etc. Many other types of food are amenable to deep frying. Deep frying generally involves immersing the food item in a high-temperature, fat-based solution, such as cooking oil (e.g., canola oil, peanut oil, vegetable oil, olive oil, liquefied shortening etc.) until the food is cooked.

While fried foods have a certain appeal due to the particular taste and texture imparted to foods that are fried, such fried foods have some undesirable characteristics. For example, immersing foods in cooking oil results in fat being introduced into the food, and this fat is not generally beneficial to the person consuming the food. Furthermore, conventional deep frying methods generally do not attempt to remove this added fat. The added fat that is consumed with fried foods raises health concerns because a high level of fat in one's diet is generally not recommended for good health and nutrition. High quantites of saturated fats such as those found in fried foods have been linked to adverse medical conditions.

Thus, some attempts have been made to remove fat from fried foods prior to serving the foods. An example is described in US 5611265. These attempts, however, require some intervening process between the time the food is removed from the high-temperature oil and the time when the food is served to a consumer. The longer the time between removal from the oil and service to the consumer, the cooler the fried food becomes. As the fried food cools, the freshness and desirability of the fried food decreases at least in part to the change in texture of the fried food. For example, when french fries begin to cool after being removed from the cooking oil, the outside of the french fries cools more rapidly than the inside. This difference in cooling rates between the outside and inside results in the oil soaking in and collecting in the center of the french fries, which results in soggy french fries containing excess oil. Studies of fried foods have shown that as much as eighty percent of the oil absorbed by the fried food is absorbed during this cooling process. Therefore, the prior art does not provide a mechanism for removing excess fat from fried foods while maintaining a desirable temperature and texture of the fried foods.

**Summary of the Invention**

As set forth in the detailed description, in accordance with various embodiments of the present invention apparatuses for automatically frying food and removing oil content therefrom are disclosed. The food frying apparatus generally comprises two sections: a frying section and an oil removal section. The frying section houses and/or heats oil for frying the food, and the oil removal section is operable to reduce the oil content of the food. A basket located within the apparatus can be moved between the two sections. Such movement may be accomplished manually or automatically, for example, by a motor and/or controller.

In various embodiments, the controller may regulate, among other aspects, the amount of time for frying the food, the amount of time for removing oil from the food, and the movement of the basket from one section to another and/or the basket's rotational speed, according to input from a user. The user may also define other operating parameters that are carried out by the controller. For example, while the food is being cooked in the oil, the food may be agitated in order to prevent the food items that are cooking from sticking together. When the food has been cooked for a specified time, the controller directs the motor to automatically move the basket to the oil removal section where the basket is rotated for a specified time at a predetermined speed in order to reduce the oil content of the food by spinning the oil out through centrifugal forces.

As defined in the claims, during the frying and oil removal processes, a cover of the food frying apparatus remains sealably attached to the food frying apparatus in order to prevent heat loss from the apparatus and help contain the oil within the apparatus. The food may be agitated in the oil and then rotated in the oil removal section without the necessity of unsealing the cover from the food frying apparatus. A heating element may be used in the oil removal section to aid in reducing the cooling of the food. Thus, embodiments of the present invention allow the food to be cooked in a more desirable manner without cooling off such that the taste, texture and desirability of the food are not adversely effected.

Embodiments of the present invention comprise the controlling of a cooling rate, C, that aids in determining the desirability of the fried food. After the food is fried in the oil, the food comprises an average temperature that is close to the temperature of the oil. When the food is removed from the oil, at a time $t_a$, the average temperature in the oil begins to decline based on any number of factors. For example, if the food is exposed to room temperature, the average temperature will decline more rapidly than if the food is exposed to a higher ambient temperature. Thus, a change in temperature, $\Delta T$ may be defined as the difference between the average temperature at the time the food is removed from the oil and an average temperature at some other point in time, $t_b$. C, then, is the ratio between $\Delta T$ and $\Delta t$, where $\Delta t = t_b - t_a$. Exemplary embodiments of the present invention minimize C in order to prevent the collection of oil towards the center of the fried food prior to serving to a consumer. Additionally, exemplary embodiments reduce the total oil consumption of the food by removing the oil before the food begins to cool, thereby making the fried food healthier.

Systems for frying food according to various embodiments of the present invention comprise devices for facilitating the frying of the fried food. For example, in certain embodiments, a filtering system may be used to remove impurities and other undesirable elements from the oil so the oil can more efficiently fry the food and extend the life of the cooking oil. In other embodiments, a fire suppression system may be used to increase the safety of the food frying apparatus. In still other embodiments, a venting system may be used to increase the circulation and airflow within the food frying system and to evacuate odors and oil from the air discharged by the frying process.

In further embodiments which are not claimed, a food frying system may comprise a plurality of food frying apparatuses located within a system housing. Each food frying apparatus may be the same as described above, and in other embodiments which are not claimed, each food frying apparatus may share a single device for removing oil content from the fried food. For example the oil removal device may be centrally located with respect to the food frying apparatuses, and each apparatus may deposit its fried food into the single oil removal device before service to consumers. The system housing may comprise a lid that is sealably connected to the system housing so that the temperature within the system housing may be elevated with respect to room temperature and/or maintained at a temperature close to the temperature of the heated cooking oil. In other embodiments, the system housing comprises a heating device to increase the ambient temperature within the system housing.

### Brief Description of the Drawings

The subject matter of the invention is particularly pointed out and distinctly claimed in the concluding portion of the specification. The invention, however, both as to structure and method of operation, may best be understood by reference to the following description taken in conjunction with the claims and the accompanying drawing figures, in which like parts may be referred to by like numerals.

FIG. 1 illustrates a cross-section of a frying apparatus according to an exemplary embodiment of the present invention.
FIG. 2 illustrates a cross-section of a frying apparatus according to an exemplary embodiment of the present invention.
FIG. 3A illustrates a side view of a frying apparatus and filtering system according to an exemplary embodiment of the present invention.
FIG. 3B illustrates a side view of a valve portion of a filtering system according to an embodiment of the present invention.
FIG. 4A illustrates a partial cross-section of a frying apparatus according to an exemplary embodiment of the present invention.
FIG. 4B illustrates a top view of a servo and discharge arm assembly according to an exemplary embodiment of the present invention.
FIG. 4C illustrates a top view of a frying apparatus according to an exemplary embodiment of the present invention.
FIG. 4D illustrates a cross-section of a frying apparatus according to an exemplary embodiment of the present invention.
FIG. 4E illustrates a cross-section of a frying apparatus according to an exemplary embodiment of the present invention.
FIG. 5 illustrates a schematic of a frying system according to an exemplary embodiment which is not claimed.

### Detailed Description

The detailed description herein makes use of various exemplary embodiments to assist in disclosing the present invention. While these exemplary embodiments are described in sufficient detail to enable those skilled in the art to practice the invention, it should be understood that other embodiments may be realized and that modifications of structures, arrangements, applications, proportions, elements, materials, or components used in the practice of the instant invention, in addition to those not specifically recited, can be varied or otherwise particularly adapted to specific environments, manufacturing specifications, design parameters or other operating requirements without departing from the scope of the present invention and are intended to be included in this disclosure. Thus, the detailed description herein is presented for purposes of illustration only and not of limitation.

In accordance with an exemplary embodiment of the present invention, the frying device comprises an oil section where a food item is fried, and a spinning section where excess oil, grease, fat and the like are removed from the food. The food is housed within a basket, and the basket is selectively movable between the oil section and the spinning section. A guide shaft is located centrally within the oil section and the spinning section, and the guide shaft is configured to guide the basket as the basket moves between the oil and spinning sections. At least one motor is employed to control operation of the frying device. For example, in certain embodiments, one motor controls the movement of the basket between sections, and another motor controls the spinning of the basket. According to the invention , the frying device has a lid which is closed after insertion of the food into the basket and remains closed until the frying and spinning processes are complete. In some embodiments of the invention, the frying device further comprises a servo for automatically removing the food from the basket when the frying and spinning processes are complete. In other embodiments, the frying device comprises a filtering system for removing unwanted particles and debris from the cooking oil. According to the invention, a controller is provided which controls the operation of the various motors and processes to allow for complete automation of the frying device.

The frying device provides a method for frying foods which comprises removing excess and/or unwanted fat, grease, oil, and the like, and simultaneously maintaining a desirable temperature within the food that is being cooked. The terms "cooking" and "frying" and formatives thereof are used interchangeably herein. Other mechanisms for cooking food besides frying fall within the scope of the present invention, such as boiling, blanching, steaming, poaching, simmering, steeping, and the like. For consistency, "frying" will be used throughout without limiting the methods of cooking for use in conjunction with embodiments of the present invention.

Additionally, in certain embodiments of the invention, water may be used in place of cooking oil in order to boil, poach, blanch or otherwise cook certain foods. The foods are housed within the basket and cooked in heated water in the water section, where the water section takes the place of the oil section. After cooking in the water, the basket is moved to the spinning section where excess water is removed so that the food does not get soggy from the excess water. Spinning and/or agitating the food also aids in preventing the food from sticking to itself. In other embodiments, water may be introduced to the cooking device during the spinning process in order to rinse starches and other products of the boiling process from the boiled food. Such foods that may be cooked by this process comprise pasta products and vegetables.

As noted above, foods that are fried tend to have excess oil at the surface as well as throughout the fried food. As the fried food cools, the outside of the food tends to cool first. The warmer inside temperature of the food draws the excess oil on the surface of the fried food to the inside of the food, resulting in an undesirable texture and taste of the fried food as well as limiting the shelf life of the food. This cooling pattern increases the amount of oil within the fried food, contrary to many health trends. Various embodiments of the present invention provide a mechanism for reducing this unwanted cooling during the excess oil removal process, leaving the excess oil at the surface of the fried food to be removed before it is drawn to the center of the fried food, thereby resulting in a fried food that is healthier and more desirable than fried food produced by current methods.

According to various exemplary embodiments of the present invention, the frying device is available in numerous sizes and/or capacities. For example, the frying device is available in commercial sizes for use by restaurants and other food-frying establishments that must produce hundreds of pounds of fried food every day. Commercial frying devices also range in size depending on the desired capacity for the commercial fryer. Other embodiments of the invention provide a frying device that is amenable to use in a user's home. For example, the frying device for personal use may produce as little as one serving of fried food. Such a personal frying device may be configured to sit on a countertop in a personal residence. All sizes and capacities of the frying device are contemplated within the scope of the present invention.

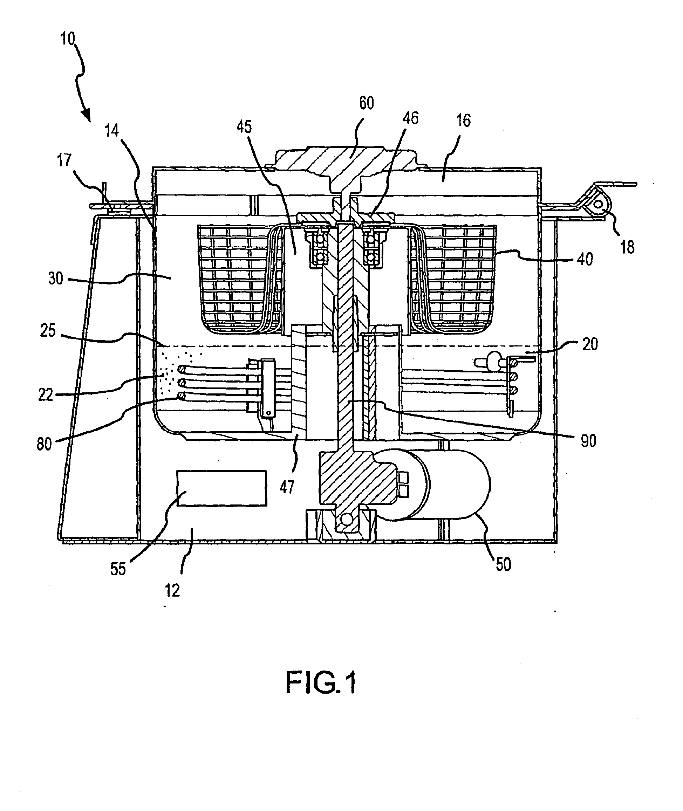

With reference to FIG. 1, an exemplary embodiment of the frying device is now described. Frying device 10 comprises a device housing 12 and a top cover 16. Top cover 16 comprises a spin motor 60. Device housing 12 comprises a frying vessel 14, a linear motor 50, and a controller 55. Frying vessel 14 comprises an oil section 20, a spinning section 30, a heating element 80, and a basket 40. A guide shaft 90 is configured to operate in conjunction with linear motor 50 and basket 40 to facilitate movement of basket 40 between oil section 20 and spinning section 30.

According to various embodiments of the invention, device housing 12 houses the components of frying device 10 and protects the environment within frying device 10 to enable the frying of the food within frying device 10, and to protect a user from the high temperatures within frying device 10. In some embodiments, device housing 12 comprises a thermal insulation material to maintain the outside of frying device 10 at a reasonable and safe operating temperature.

In accordance with further embodiments of the invention, oil section 20 is located within device housing 12 and is configured to receive basket 40 in order to fry the food contained in basket 40. Oil section 20 is further configured to heat any type of oil that is capable of frying food in a manner that renders the food edible. Such oil may be cooking oil, vegetable oil, corn oil, peanut oil, canola oil, olive oil, and the like. Examples of food that may be cooked in cooking oil 22 are potatoes, chicken, pork, beef, candy bars, ice cream, etc. Basket 40 is adaptable to receive any type of food that may be cooked in oil section 20, and in various embodiments, different types, shapes, sizes, and/or configurations of baskets are available to cook different types of food. An oil level 25 is maintained in oil section 20 in order to allow for the sufficient immersion of basket 40 and/or the food to be cooked within cooking oil 22.

According to other embodiments of the invention, a mechanism for heating cooking oil 22 is provided. In exemplary embodiments, heating element 80 is in thermal contact with cooking oil 22 and is operable to heat cooking oil 22. In some embodiments, heating element 80 is also in physical contact with cooking oil 22, for example, heating element 80 may be located within oil section 20. In other embodiments of the invention, a thermally conductive material may be present between heating element 80 and cooking oil 22. For example, heating element 22 may be located outside of, but in thermal contact with frying vessel 14 which may have thermally conductive walls, or may have a partially thermally conductive wall proximate heating element 22. In yet other embodiments, where heating element 80 is located within oil section 20, frying vessel 14 may be thermally insulated in order to aid in maintaining the outside of frying device 10 at a safe operating temperature. The heating element is operable to be driven by electricity, gas, solar power, and the like.

In other embodiments, heating element 80 is located within spinning section 80 and/or is located both within the spinning and oil sections. In still other embodiments, two heating elements may be used. For example, one heating element may be used to heat the oil in the oil section, and a second heating element may be used to aid in maintaining a desirable temperature in the spinning section. Employing a second heating element for heating the spinning section aids in increasing the amount of oil removed from the fried food. The higher the temperature during spinning, the less viscous the oil is so it is easier to spin off, and the higher the temperature, the less oil has been drawn to the center of the fried food. Thus, where spinning occurs at higher temperatures, more oil is available to be spun off the fried food.

According to the invention spinning section 30 is operable to remove excess oil from the surface of the fried food at an elevated temperature. Basket 40 is a food spinner wherein the fried food is spun to remove the excess oil. In other embodiments, basket 40 is a centrifugal oil removal device, because the rotation of basket 40 aids in removing oil from the fried food. Spinning section 30 is proximate oil section 20 within frying vessel 14, and is disposed between oil section 20 and top cover 16. After food has been cooked in oil section 20, basket 40 is moved into spinning section 30 to facilitate removing excess oil from the cooked food. As the oil is removed from the food, the removed oil returns to oil section 20 for further use in frying, for removal from frying device 10 and/or for filtering in order to reclaim the used oil.

The invention further provides a top cover 16 that is operable to maintain an elevated temperature within spinning section 30. Top cover 16 is proximate device housing 12, frying vessel 14, and spinning section 30. Top cover 16 is operable to separate the frying environment within frying device 10 from the environment outside frying device 10. Top cover 16 comprises a thermally insulating material that reduces temperature loss to the outside of frying device 10 and that reduces the energy required to maintain frying device 10 at a desirable operating temperature. The thermal insulating material also maintains the outside surface of top cover 16 at a temperature that is amenable to being touched by a user without injuring the user. Top cover 16 may also comprise a shock mount 17 that is operative to reduce vibration, shaking, movement and the like and a pivot 18 which is operative to provide rotational movement of top cover 16. Top cover 16 facilitates the maintenance of a desirable temperature within the food that is cooked by frying device 10 while oil is being removed from the cooked food. For example, top cover 16 is designed to allow basket 40 to rotate within spinning section 30 while top cover 16 remains closed. It is not necessary, according to the invention, to open top cover 16 between frying the food and removing the oil from the food. In some embodiments of the invention, top cover 16 comprises spin motor 60 to facilitate spinning of basket 40 to remove oil from the food. In various embodiments, spin motor 60 may be powered by batteries, direct current, alternating current, solar power, gasoline, and the like.

Various components are operable to move basket 40 during the food frying and oil removal processes. In an exemplary embodiment of the invention, the motion of basket 40 within frying vessel 14 is controlled by linear motor 50, spin motor 60, guide shaft 90, basket support 45, basket coupling 46, basket lift mechanism 47, and controller 55. Basket 40 is coupled to basket support 45 which is coupled to basket lift mechanism 47. Basket lift mechanism 47 is coupled to linear motor 50, and linear motor 50 acts on lift mechanism 47 to facilitate moving basket 40 between oil section 20 and spinning section 30. For example, where oil section 20 is vertically-oriented with respect to spinning section 30, linear motor 50 vertically translates basket 40 between the two sections. In certain embodiments of the invention, linear motor 50 comprises a helical drive. In further embodiments, linear motor 50 comprises a direct drive motor, such that pulleys, belts, chains, and the like are not necessary for the motor to drive basket 40. In other embodiments, linear motor 50 comprises any device capable of automatically moving basket 40 between oil section 20 and spinning section 30. In various embodiments, linear motor 50 may be powered by batteries, direct current, alternating current, solar power, gasoline, and the like.

With continued reference to FIG. 1, basket lift mechanism 47 sealably nests within basket support 45 so as to prevent cooking oil 22 from exiting oil section 20 and contaminating the basket lift mechanism. Basket 40 is attached to and receives basket support 45, thereby allowing linear motor 50 to move basket 40 between oil section 20 and spinning section 30. In accordance with various embodiments of the invention, basket 40 is cylindrical in shape, and basket support 45 is located centrally within basket 40. Guide shaft 90 runs centrally through basket 40, basket support 45, and basket lift mechanism 47 to facilitate the vertical movement of basket 40 between oil section 20 and spinning section 30.

Other embodiments of the present invention comprise a basket coupling 46 which interfaces with basket support 45 and spin motor 60 in order to allow spin motor 60 to rotate basket 40 about the basket's vertical axis. Basket coupling 46 interfaces with guide shaft 90, which causes basket support 45 to appropriately contact basket coupling 46 in order to allow spin motor 60 to rotate basket 40. In certain embodiments of the invention, spin motor 60 is a pancake-type motor. In other embodiments of the invention, spin motor 60 is any device capable of automatically rotating basket 40 within spinning section 30. In further embodiments, basket 40 may be manually rotated.

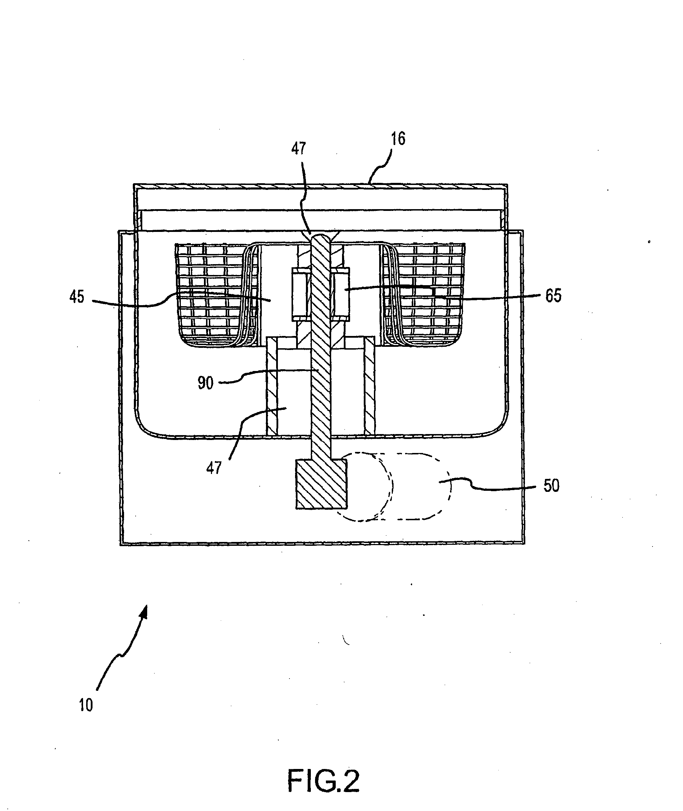

In other embodiments of the invention, other motor configurations are contemplated. With reference to FIG. 2, another embodiment of the present invention is shown. In this embodiment, spin motor 60 is not present within top cover 16; rather, rotational motor 65 is disposed within basket support 45 and/or basket lift mechanism 47. In such an embodiment, basket 40 is capable of rotating both in spinning section 30 and in oil section 20. Spinning may occur in both sections during the same frying process without removing top cover 16.

When starchy and/or battered foods are deep fried, they tend to stick together if they are not agitated and/or mixed during frying. Causing basket 40 to spin while in oil section 20 agitates and/or mixes the food within basket 40 and thereby discourages the food from sticking together. Spinning basket 40 within oil section 20 further facilitates the frying process by mixing the oil and thereby redistributing the heat throughout oil section 20. An agitation motor, such as rotational motor 65 may also be used to agitate basket 40 in oil section 20 by periodically switching directions of the rotation of basket 40. For example, rotational motor 65 can turn basket 40 for one-half of a rotation and then switch directions and turn basket 40 in the reverse direction for one-half of a rotation. In other embodiments, rotational motor 65 agitates, rotates, or otherwise moves basket 40 in spinning section 30. In various embodiments, rotational motor 65 may be powered by batteries, direct current, alternating current, solar power, gasoline, and the like.

According to other embodiments of the invention, linear motor 50 is operable to induce agitation in basket 40 while basket 40 is in oil section 20. For example, linear motor 50 may repeatedly move basket 40 up and down through a certain displacement, such as through a one-half inch displacement. These movements result in the food in basket 40 being agitated and/or mixed such that the food does not stick together and such that the food cooks more efficiently. Another embodiment of the invention comprises a cam that is operable to produce the desired vibratory agitation. Thus, according to these embodiments, basket 40 is capable of being rotated both within spinning section 30 and within oil section 20 during the same frying process for an item of food without opening top cover 16. Leaving top cover 16 closed between the frying and spinning processes decreases temperature loss from the food and increases the desirable characteristics of the food.

Various embodiments of the present invention allow different combinations of motors to produce the desired rotation, translation, and/or agitation of basket 40. For example, linear motor 50 may be the only motor, rotational motor 65 may be the only motor, and spin motor 50 may be the only motor. When only one motor is present in frying device 10, that motor may be capable of providing all of the desired movement and/or a certain number of the desired movements. In certain embodiments, rotational motor 65 is operable to move basket 40 between sections, to rotate basket 40 in both sections, and to agitate basket 40 in oil section 20. In other embodiments, two motors may be used, and in still other embodiments, more than two motors may be used, for example, one motor each for agitation, translation, and rotation. Further embodiments allow for manual user intervention to provide any of the desired rotation, translation, agitation and/or operation of other components.

The present invention provides mechanisms for automatically controlling frying device 10. Within the limitations of claim 1, and with reference again to FIG. 1, controller 55 controls operation of at least one function and/or component of frying device 10. Controller 55 may comprise any type of controller known in the art for controlling electrical and/or mechanical systems. As a motor controller, controller 55 may direct the operation of linear motor 50 to move basket 40 between oil section 20 and spinning section 30, and may direct spin motor 60 to rotate basket 40 about its vertical axis. In other embodiments, controller 55 accepts input from a user for temperature, cook time, spin time, oil level, and other factors a user would want to control in relation to the operation of frying device 10. Controller 55 controls automatic extraction of the food from frying device 10 when the frying and spinning processes are complete. Controller 55 may also control automatic operation of a filtering system that removes impurities and other undesirable items from cooking oil 22. Controller 55 may also control additional motors, such as rotational motor 65, and may control other frying device functions, such as agitation of basket 40 in oil section 20. Controller 55 may comprise, control, and/or communicate with various sensors, such as temperature sensors, and other components within frying device 10.

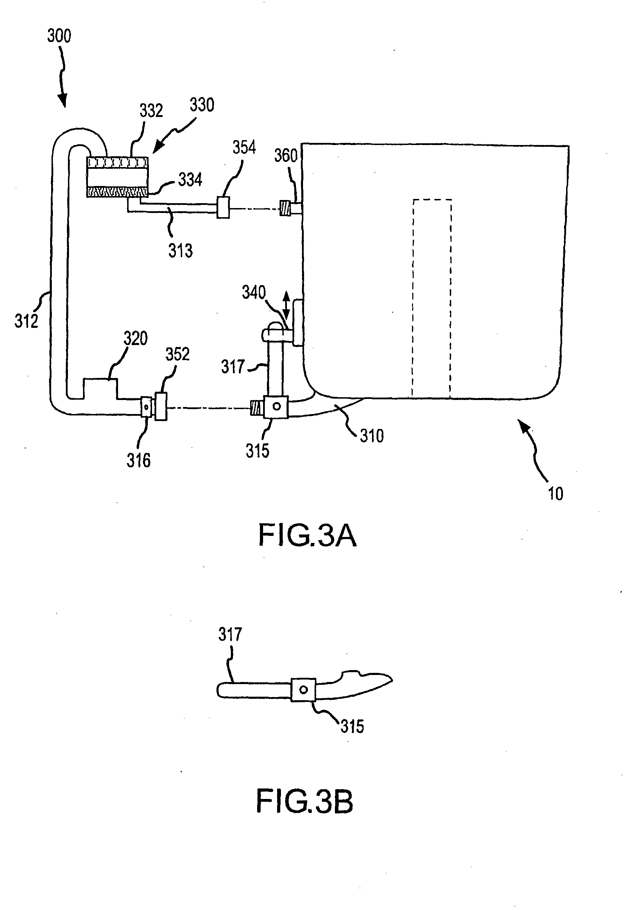

According to various embodiments of the present invention, it is desirable to remove impurities from cooking oil 22. With reference to FIG. 3, a filter system 300 for use with frying device 10 according to an embodiment of the invention is now described to provide such a function. In certain embodiments, filter system 300 comprises an integrated oil filter for removing the impurities from cooking oil 22. Filter system 300 is operable to manually or automatically remove sediment, fried food particles, impurities, and other undesirable particles from cooking oil 22. For filter system 300 to be functional in some embodiments, a safety latch 340 is switched to an operating position. Cooking oil 22 then exits frying device 10 via an exit pipe 310 and enters filter system 300 via a valve 315 and/or another valve 316. Valves 315 and 316 may be any valves capable of controlling the flow rate of fluids such as cooking oil 22 in a heated or cooled state. A valve switch 317 controls operation of valve 315 and controls the flow rate of cooking oil 22 into filter system 300. Exit pipe 310 and valve 315 are coupled to valve 316, pump 320, and transfer pipe 312 via female coupling 352.

A pump 320 moves cooking oil 22 through a transfer pipe 312, a filter box 330, and a return pipe 313 so that filter system 300 can return the filtered oil to frying device 10. Pump 320 may be any device capable of pumping a fluid such as cooking oil 22 in a heated or cooled state.

Filter box 330 is operable to remove sediment and other undesirable particles from cooking oil 22. Filter box 330 comprises, according to various embodiments, at least one filter for filtering cooking oil 22. In certain embodiments, Filter box 330 comprises a wire mesh filter 322 and a fine filter 334. In other embodiments, filter box 330 comprises only one filter.

The filtered cooking oil exits filter box 330 via return pipe 313. Return pipe 313 is coupled to frying device 10 via a female coupling 354 and a return port 360. Return port 360 receives the filtered cooking oil and returns the filtered cooking oil to oil section 20 for further frying processes. In certain embodiments of the invention, filter system 300 is thermally insulated in order to minimize the temperature drop between exit pipe 310 and return port 360 so as to minimize energy required to reheat the filtered cooking oil. Filter system 300 is operable during the frying process, during the spinning process, after both processes are finished, and at other times during operation of frying device 10. Filter system 300 is configured so as not to interfere with any of the operations of frying device 10, including the automatic discharge process discussed below. The filter system may be controlled by controller 55, and a user may specify parameters of the filtering process for automatic control by controller 55.

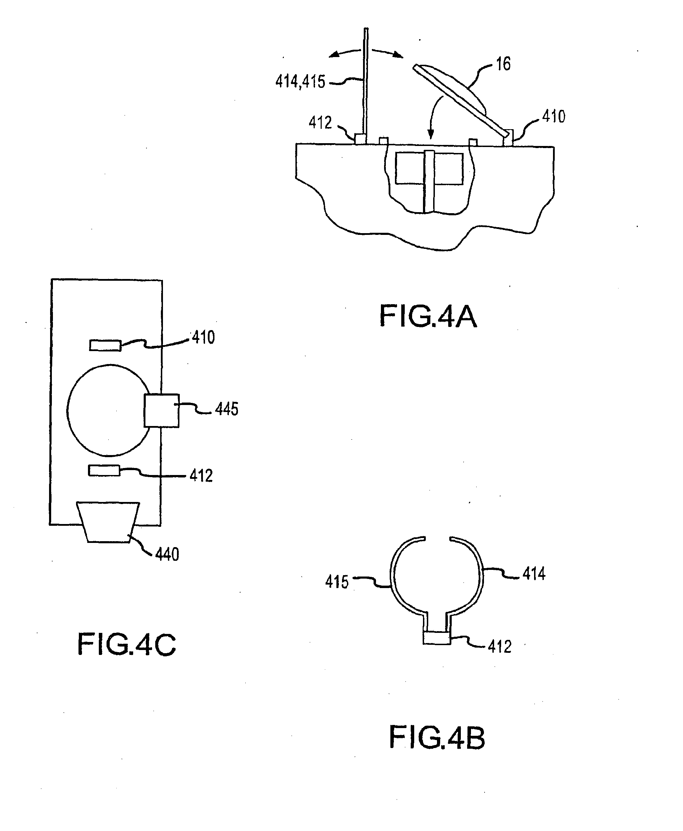

In an exemplary embodiment of the invention, frying device 10 is capable of automatic operation following insertion of the uncooked food into basket 40, including the automatic process of discharging the cooked food from frying device 10. In other embodiments, the uncooked food may be loaded into the frying device through intake chute 445. With reference to FIGS. 4A-4E, exemplary embodiments of the automatic discharge process are described. The automatic discharge process involves automatically opening top cover 16, removing basket 40 from frying vessel 14 and discharging the cooked food down a food exit chute such as discharge chute 440. Controller 55 communicates with and controls the automatic operation of the various components involved in the automatic discharge process.

According to further embodiments of the invention, frying device 10 comprises a basket retrieval mechanism. In certain embodiments, the basket retrieval mechanism comprises servos 410, 412 for automatically discharging the cooked food. Servo 410 is operable to open top cover 16 upon completion of the frying and spinning processes. Servo 412 is operable to control discharge arms 414, 415. Servos 410, 412 are configured to provide rotational, translational, and/or clamping movement and may be any devices capable of providing such movement. The servos may be operated by battery power, alternating current power, direct current power, gas power, and other mechanisms for providing power.

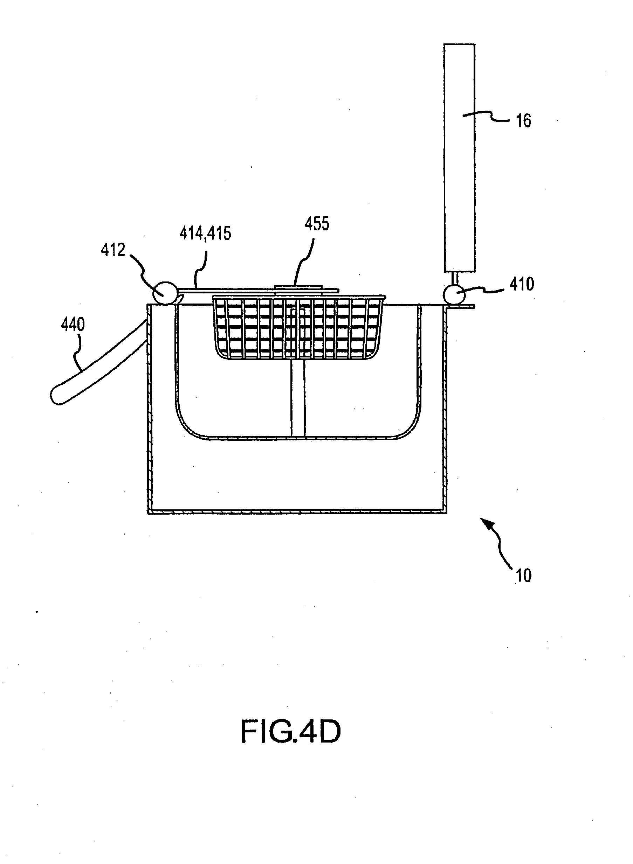

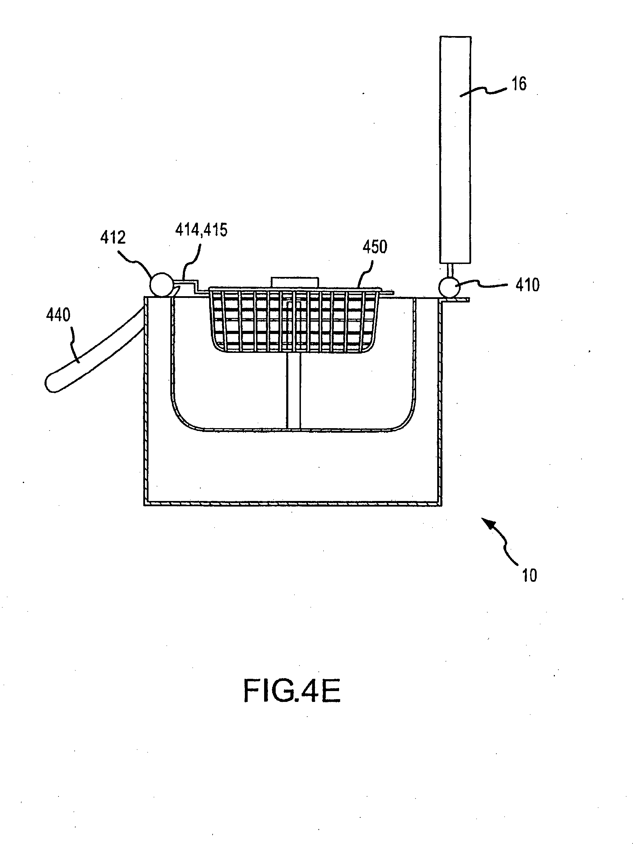

FIG. 4B shows a configuration of discharge arms 414, 415 according to one embodiment of the invention. Discharge arms 414, 415, in this embodiments, are configured to interface with stabilizing ring 450 and/or discharge ring 455 on basket 40 (See FIGS. 4D, 4E). Servo 412 rotates discharge arms 414, 415 into place around stabilizing ring 450 and/or discharge ring 450. In some embodiments, discharge arms 414, 415 snap into place around stabilizing ring 450 and/or discharge ring 450. In other embodiments, servo 412 and/or other devices are operable to clamp discharge arms 414, 415 into place around stabilizing ring 450 and/or discharge ring 455. With discharge arms 414, 415 in place, servo 412 rotates basket 40 out of frying vessel 14, and the cooked food exits frying device 10 via discharge chute 440. A user may place a bowl, pan, plate or other utensil proximate discharge chute 440 so that the utensil will receive the cooked food from discharge chute 440.

In accordance with an exemplary embodiment of the present invention, frying device 10 is configured to produce a cooked food that is more desirable than cooked foods produced by other frying methods. When the fried food is done frying in the oil, some oil has collected at the outside of the fried food. If the excess oil is removed before the fried food cools, up to 80% of the oil content of the fried food may be reduced. However, as an item of fried food, for example, a french fry, begins to cool, the outside of the french fry cools faster than the inside. This uneven cooling causes the excess oil at the outside of the french fry to be drawn to the center of the french fry, causing the french fry to become soggy and increasing the oil content of the fried food. Soggy french fries are generally not desirable for consumption. Increased oil in the french fry is also not desirable from a health standpoint. Thus, it is desirable for the temperature at the inside and outside of the french fry to be the same until it is served to a consumer. However, some presently-known frying processes employ a method for removing excess oil from the fried food after frying and before serving to a consumer. These processes generally remove the excess oil in an environment that contributes to rapid cooling of the food.

Exemplary embodiments of the present invention, on the other hand, comprise an excess oil removal process that is conducted in an environment that minimizes the cooling rate of the fried food. In one embodiment, the average temperature of the french fry (or other fried food) is $T_{avg}$. The closer $T_{avg}$ is to the temperature of cooking oil 22, $T_{oil}$, the less temperature difference there will be between the outside and inside temperatures of the french fry, assuming the entire french fry was at the temperature of the cooking oil when the frying was completed. It is therefore desirable to minimize $T_{oil} - T_{avg}$, or $\Delta T_{avg}$ at the time the french fries are served to a consumer. A cooling rate (C) can be calculated at a specified time after frying in the oil has been completed ($t_c$):

$$C = \Delta T_{avg} / t_c$$

For example, assuming an oil temperature of $T_{oil}$ = 190°C, and cooling the fried food in an environment having a temperature of 27°C, at time after frying of $t_c$ = 180 seconds, and an average temperature at 2 minutes of $T_{avg}$ = 27°C, then $\Delta T_{avg}$ = 163°C, and C = 0.91 °C/second. On the other hand, assuming the other variables are the same, if $T_{avg}$ = 155°C, then $\Delta T_{avg}$ = 35°C, and C = 0.194 °C/second. In the scenario where C is higher, there is a greater likelihood of the french fries being soggy because more excess oil has been drawn to the center of the fried food, and/or the fried food has cooled too rapidly for the excess oil to be removed, making the fried food unhealthy and undesirable to consumers. Thus, it is important to minimize C.

It should be noted that according to other embodiments of the present invention, C may be a function of time, cooling conditions, thermal properties of the fried food, initial oil content of the fried food, geometry of the fried food, and the like. In certain embodiments, the convection heat transfer coefficient influences the cooling rate of the fried food. For example, if the ambient temperature where the fried food is being cooled is low, the heat transfer rate from the fried food will be greater. If air is moving past the fried food at the low ambient temperature, heat transfer will be further increased according to the speed of the air flow. Thus, moving air past the fried food is not desirable at a low ambient temperature because the fried food might cool more rapidly, thus preventing the removal of the excess oil before it collects at the center of the fried food. Thus, exemplary embodiments of the present invention provide a mechanism for moving air past the fried food in order to remove the excess oil at the surface of the fried food, but moving the air past the fried food at an elevated temperature in order to reduce the cooling rate of the fried food. According to an embodiment of the invention, the following table shows some theoretical temperatures of a fried food that is being cooled in different ambient temperatures, at different periods of time. An oil temperature of 190°C is used. All temperatures are in Celsius, and the time is in seconds.

Table 1.

| Time | Ambient = 27 | Ambient = 65 | Ambient = 150 |
|------|------|------|------|
| 0 | 190 | 190 | 190 |
| 20 | 135 | 147 | 180 |
| 40 | 95 | 120 | 174 |
| 60 | 70 | 100 | 169 |
| 80 | 55 | 88 | 164 |
| 100 | 45 | 80 | 161 |
| 120 | 36 | 74 | 158 |
| 140 | 32 | 70 | 157 |
| 160 | 28 | 68 | 156 |
| 180 | 27 | 67 | 155 |

Thus, according to the embodiment expressed in Table 1, at 40 seconds after cooking, or $t_c$ = 40 seconds, $\Delta T_{avg}(27)$ = 95°C, $\Delta T_{avg}(65)$ = 70°C, and $\Delta T_{avg}(150)$ = 16°C. The corresponding cooling rates are C(27) = 2.375 °C/minute , C(65) = 1.75 °C/minute, and C(150) = 0.4 °C/minute. Thus, where the ambient cooling temperature is higher, C is lower, and more oil may be removed from the surface of the fried food during the spinning process. It should be noted that Table 1 is only representative of exemplary embodiments of the present invention, and other cooling rates, temperatures, and other parameters are possible depending on the specific operating conditions of a particular embodiment of the invention.

According to further embodiments of the invention, the temperature of the fried food is a function of time. For example, the temperature may be a third-order polynomial as a function of time. In other embodiments, the temperature profile may be exponential, linear, a power function, n-order polynomials, and other types of functions. In such embodiments, the cooling rate is also a function of time, characterized by the change in temperature over a change in time, or dT(t)/dt, or the first derivative of the temperature function. For example, where the temperature profile is a third-order polynomial, $T(t) = At^3 + Bt^2 + Dt + E$, and $dT(t)/dt = C(t) = 3At^2 + 2Bt + D$.

Various exemplary embodiments of the present invention comprise methods of automatically reducing oil content of fried foods and minimizing C at the same time. As claimed, top cover 16 remains closed while basket 40 is moved out of oil section 20 and into spinning section 30. Top cover continues to remain closed while spin motor 60 and/or rotational motor 65 spins, agitates and/or moves basket 40 in order to remove oil from the fried food. Because top cover 14 remains closed after frying, the temperature surrounding the fried food remains at least close to, if not the same as, the temperature of cooking oil 22. Thus $\Delta T_{avg}$ approaches zero during the spinning process even while $t_c$ grows, resulting in a C that also approaches zero. Only after the oil removal process do $\Delta T_{avg}$ and C begin to grow appreciably. Therefore, embodiments of the present invention provide fried foods with a reduced oil content that are nearly the same temperature as the fried foods with higher oil content that are served immediately after frying in oil. Such embodiments provide for greater removal of the excess surface oil of the fried foods. Other embodiments provide fried foods that are more desirable than fried foods produced by other methods, where the other methods remove oil content without minimizing C and thus facilitate the production of undesirable foods.

Other aspects of the invention provide systems such as a ventilation system and a fire suppression system. Such systems aid in the safe operation of the food fryer. Such systems also aid in maintaining a desirable operating environment. For example, the ventilation system may remove oil-filled heated air from the food fryer and replace it with fresh air. In certain embodiments, the fresh air may be preheated to aid in reducing the cooling rate of the fried food in the spinning section. In yet other embodiments, the spinning air created by basket 40 when it is being rotated, drives air out of spinning section 30 and into the venting system. In still other embodiments, the ventilation system may comprise an oil ventilation device for replacing used oil with new oil and/or reclaiming the used oil. The ventilation and fire suppression systems may be automatically and/or manually operated.

Further embodiments which are not claimed comprise methods for reducing oil content from fried foods that are more efficient than previously-known methods for reducing oil content. As discussed above, top cover 16 remains closed during the oil removal process, which causes the temperature of the fried food to remain close to the temperature of cooking oil 22. At this elevated temperature, the cooking oil within and covering the fried food is less viscous. Because the oil is less viscous, it is more amenable to separation from the fried food during the oil removal process, thus making the oil removal process more efficient.

A method for automatically frying and reducing the oil content of a fried food is now described. Frying device 10 is provided, as well as a target food to be fried. A user instructs frying device 10 with regards to the different variables involved in the frying process. For example, the user may specify a type of food, a quantity of food, a desired frying result (e.g., rare, medium-rare, medium, medium-well, well-done, etc.), an oil temperature, a frying time, an oil removal time (e.g., time for spinning), and the like. Controller 55 accepts the instructions and opens top cover 16 automatically upon the user's signaling that all instructions have been made. In other embodiments, top cover 16 may be manually opened by the user. The user loads the target food into loading chute 445 and instructs frying device 10 to close top cover 16 and being the frying process.

After top cover 16 is closed, frying device 10 performs the frying process automatically. In certain embodiments, frying device 10 has a manual override that allows the user to interrupt the automatic frying process. Controller 55 ensures cooking oil 22 is at the appropriate temperature by measuring the temperature and instructing heating element 80 to produce more or less heat. Controller 55 then instructs linear motor 50 to move basket 40 into oil section 20 to begin the frying process and/or perform manual tasks. While basket 40 is in oil section 20, basket 40 may be agitated, rotated, spun and/or otherwise moved in order to prevent the target food from sticking together and/or to facilitate the frying of the target food. Controller 55 may direct the moving of basket 40 in response to input from the user and/or as part of a pre-programmed routine. Controller 55 may communicate with and instruct various frying device components in order to facilitate the movement of basket 40. For example, spin motor 60, linear motor 50, and/or rotational motor 65 may be instructed to move basket 40.

When controller 55 determines that the target food has been cooked according to the user's specifications, controller 55 instructs linear motor 50 and/or rotational motor 65 to move basket 40 into spinning section 30. Controller 55 further instructs basket 40 to begin spinning by instructing any of linear motor 50, spin motor 60, and/or rotational motor 65 to spin basket 40. A user may predetermine a spinning speed for basket 40 and controller 55 may operate the basket at the predetermined speed. Controller 55 may also automatically determine the required spinning speed depending on other operating conditions. In other embodiments not being part of the present invention, basket 40 need not spin, but may be moved in other ways that remove excess oil from the target food, for example, by agitation. During the spinning process controller 55 monitors the temperature of spinning section 30 and may instruct heating element 80 to increase its heat output in order to increase the temperature of cooking oil 22, thereby increasing the temperature in spinning section 30. During the spinning process, top cover 16 remains closed, thus minimizing the rate of temperature loss within the target food (C, as discussed above).

When controller 55 determines that the spinning process should be terminated, controller 55 ceases movement of basket 40 and instructs top cover 16 to open. Controller 55 may control top cover 16 via servo 410, for example. Controller 55 then instructs basket 40 to discharge the target food through discharge chute 440. Various methods of discharging the target food may be employed according to various embodiments of the invention, and one embodiment is disclosed here. For example, frying device 10 may comprise servo 412 that is attached to discharge arms 414, 415. Discharge arms 414, 415 are configured to interface with basket 40 and to allow servo 412 to rotate basket 40 away from frying vessel 14 so as to discharge the target food through discharge chute 440. Controller 55 then returns basket 40 to frying vessel 14, and, depending on the user's instruction, may instruct cooking oil 22 to cool down.

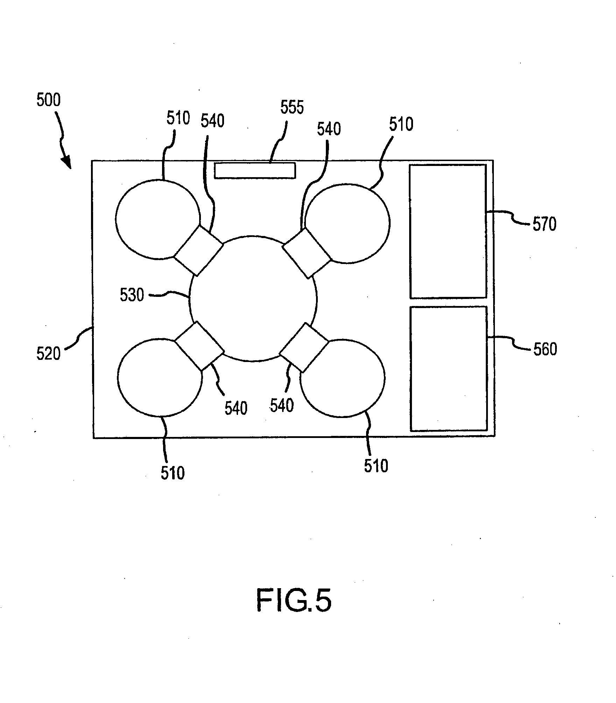

In accordance with another embodiment which is not claimed a frying system 500 capable of removing oil content from fried food is now disclosed with reference to FIG. 5. Frying system 500 comprises a system housing 520 which comprises a plurality of frying devices 510. Frying devices 510 may be similar in structure and may be operated in a similar manner to frying device 10 discussed previously. Frying devices 510 may also be any device capable of frying or otherwise frying food. System housing 520 further comprises a spinner 530 which receives fried food from frying devices 510 via discharge chutes 540 and/or via manual placement of the fried food in spinner 530 by a user. After frying devices 510 have cooked the fried food, spinner 530 receives the fried food and processes the fried food in order to remove excess oil content from the food. In certain embodiments, frying devices 510 may carry out their own spinning and/or oil removal operations prior to depositing the fried food in spinner 530, or they may deposit the fried food directly after frying it in the cooking oil. System housing 520 also comprises a system controller 555 which communicates with and directs operation of the various components in frying system 500.

According to further embodiments, system housing 520 is configured to increase the safety associated with the operation of frying system 500. For example, system housing 520 may comprise a fire suppression system 570. Fire suppression system 570 is operable to automatically detect and extinguish fires within system housing 520. In other embodiments, a user can manually instruct fire suppression system 570 to extinguish a fire and/or a threat of fire within system housing 520. According to other embodiments, system housing 520 further comprises a ventilation system 560 for increased safety, circulation, and/or degree of desirable environmental conditions. In further embodiments ventilation system 560 is operable to remove oil-filled, heated air from system 500.

In accordance with another embodiment, frying system 500 comprises a frying system cover. The frying system cover reduces temperature loss to the surroundings of the frying system which decreases the cooling rate of the fried food during the spinning process. Frying system 500 may further comprise heating elements such as heat lamps, resistive heating elements, gas burners, and other mechanisms for providing heat. The heating elements within system housing 520 may regulate the temperature within system housing 520 and regulate the temperature of the fried food during the oil removal process.

In certain embodiments, spinner 530 may be present in system housing 520 and frying devices 510 may not be present. In such an embodiment, fried food from fryers external to system housing 520 is placed in spinner 530 and then the frying system cover is closed. Spinner 530 removes excess oil from the fried food and frying system 500 maintains the temperature of the fried food during the spinning process.

In still other embodiments, frying devices 510 may be present in system housing 520 and spinner 530 may not be present. In these embodiments, frying devices 510 are nearly identical to frying device 10 discussed above. Each frying device 510 is independently operated and controlled and/or operated and controlled in conjunction with the other frying devices 510. After the settings for the frying devices 510 have been inputted by a user. The frying system cover is closed and the frying devices 510 operate automatically to produce the fried food. The fried food from each of the frying devices may be deposited within a fried food receptacle within system housing 520, and the fried food may be kept warm in the receptacle by heat lamps, heating elements, and or other devices for heating an enclosed space. When all of the frying devices 510 are finished, the frying system cover may be opened, and the fried food may be served. Such an embodiment increases the amount of fried food that may be produced and provides a mechanism for maintaining a desirable temperature of the fried food until it is served.

Various principles of the present invention have been described in exemplary embodiments. However, many combinations and modifications of the above-described structures, arrangements, proportions, elements, materials, and components, used in the practice of the invention, in addition to those not specifically described, can be varied within the limitations of the attached claims.

## Claims

1. A frying device (10) for frying a food in oil, comprising:

   a heating element (80);
   a housing (12);
   a cover, wherein said heating element, said housing and said cover are interoperable to maintain a cooling rate C of less than 50 °C per minute;
   an oil section (20) and a spinning section (30), said oil and spinning sections disposed within said housing (12);
   a motor (50) for moving a basket, wherein said basket is selectively movable between said oil section (20) and said spinning section (30); and
   a controller (55) that is configured to perform the following sequence to automatically fry food and reduce the oil content of the fried food:-

a) accept user instructions with regard to variables of a frying process;

b) ensure that cooking oil in the oil section is at an appropriate temperature;

c) instruct motor (50) to move the basket into the oil section to begin the frying process;

d) when the controller (55) determines that food in the basket has been cooked according to a specification of the user, instruct the motor to move the basket into the spinning section;

e) instruct the or a motor to begin a spinning process comprising spinning the basket;

f) monitor the temperature of the spinning section (30) and instruct the heating element (80) to increase its heat output in order to increase the temperature of the cooking oil thereby increasing the temperature in the spinning section (30);

g) when the controller determines that the spinning process should be terminated, cease movement of the basket; and

h) instruct the cover to open, wherein the cover cover is configured to remain closed at least throughout stages b) to g).

2. The frying device according to claim 1, further comprising a second heating element, wherein said heating element (80) is disposed within at least one of said oil section (20) and said spinning section (30), and wherein said second heating element is disposed within at least one of said oil section (20) and said spinning section (30).

3. The frying device according to claim 1, further comprising an agitation motor (65) for moving said food spinner within at least one of said oil section (20) and said spinning section (30).

4. The frying device according to claim 1, wherein the controller (55) is for automatically controlling at least one function of said food frying device.

5. The frying device according to claim 1, further comprising:

an oil filter (330) comprising at least one of a wire mesh filter and a fine filter; and
a pump (320) in fluid communication with said filter (330).

6. The frying device according to claim 1, further comprising at least one of a fire suppression system and a ventilation system.


**Patentansprüche**

1. Frittiervorrichtung (10) zum Frittieren eines Lebensmittels in Öl, umfassend:

ein Heizelement (80);
ein Gehäuse (12);
eine Abdeckung, wobei das Heizelement, das Gehäuse und die Abdeckung zusammen betriebsfähig sind, um eine Abkühlgeschwindigkeit C von weniger als 50 °C pro Minute beizubehalten;
einen Ölabschnitt (20) und einen Spin-Abschnitt (30), wobei der Öl- und der Spin-Abschnitt in dem Gehäuse (12) angeordnet sind;
einen Motor (50) zum Bewegen eines Korbes, wobei der Korb selektiv zwischen dem Ölabschnitt (20) und dem Spin-Abschnitt (30) bewegt werden kann; und
eine Steuerung (55), die zum Ausführen der folgenden Abfolge von Schritten konfiguriert ist, um ein Lebensmittel automatisch zu frittieren und den Ölgehalt im frittierten Lebensmittel zu verringern:

a) Annehmen von Benutzereingaben in Bezug auf Variablen eines Frittiervorgangs;
b) Sicherstellen, dass das Speiseöl im Ölabschnitt eine geeignete Temperatur hat;
c) Auffordern des Motors (50) dazu, den Korb in den Ölabschnitt zu bewegen, um den Frittiervorgang zu beginnen;
d) Auffordern des Motors dazu, den Korb in den Spin-Abschnitt zu bewegen, wenn die Steuerung (55) ermittelt, dass das Lebensmittel im Korb einer Benutzervorgabe entsprechend gegart worden ist;
e) Auffordern des oder eines Motors dazu, einen Spin-Vorgang, umfassend das Schleudern des Korbes, zu beginnen;
f) Überwachen der Temperatur des Spin-Abschnitts (30) und Auffordern des Heizelements (80) dazu, seine Wärmeabgabe zu steigern, um die Temperatur des Speiseöls und damit die Temperatur im Spin-Abschnitt (30) zu erhöhen;

g) Aufhalten der Bewegung des Korbes, wenn die Steuerung ermittelt, dass der Spin-Vorgang beendet werden sollte; und

h) Auffordern der Abdeckung dazu, sich zu öffnen, wobei die Abeckung dazu konfiguriert ist, zumindest während der Schritte b) bis g) geschlossen zu bleiben.

2. Frittiervorrichtung nach Anspruch 1, die ferner ein zweites Heizelement umfasst, wobei das Heizelement (80) in mindestens einem von dem Ölabschnitt (20) und dem Spin-Abschnitt (30) angeordnet ist und wobei das zweite Heizelement in mindestens einem von dem Ölabschnitt (20) und dem Spin-Abschnitt (30) angeordnet ist.

3. Frittiervorrichtung nach Anspruch 1, die ferner einen Rührmotor (65) zum Bewegen der Lebensmittel-Spin-Vorrichtung in mindestens einem von dem Ölabschnitt (20) und dem Spin-Abschnitt (30) umfasst.

4. Frittiervorrichtung nach Anspruch 1, wobei die Steuerung (55) der automatischen Steuerung mindestens einer Funktion der Lebensmittelfrittiervorrichtung dient.

5. Frittiervorrichtung nach Anspruch 1, ferner umfassend:

einen Ölfilter (330), der mindestens eines von einem Drahtgewebe-Filter und einem Feinfilter umfasst; und eine Pumpe (320) in Fluidverbindung mit dem Filter (330).

6. Frittiervorrichtung nach Anspruch 1, die ferner mindestens eines von einem Brandschutzsystem und einem Belüftungssystem umfasst.

## Revendications

1. Dispositif de friteuse (10) pour frire de la nourriture dans de l'huile, comprenant :

un élément de chauffage (80) ;
un boîtier (12) ;
un couvercle, ledit élément de chauffage, ledit boîtier et ledit couvercle étant interopérables pour maintenir un taux de refroidissement C de moins de 50°C par minute ;
une section huile (20) et une section essorage (30), lesdites sections huile et essorage étant disposées dans ledit boîtier (12) ;
un moteur (50) pour déplacer un panier, ledit panier étant sélectivement déplaçable entre ladite section huile (20) et ladite section essorage (30) ; et
un contrôleur (55) configuré pour effectuer la séquence suivante pour frire de la nourriture automatiquement et réduire la teneur en huile de la nourriture frite :

a) accepter les instructions de l'utilisateur concernant des variables d'un procédé de friture ;
b) s'assurer que l'huile alimentaire dans la section huile est à une température appropriée ;
c) instruire le moteur (50) de déplacer le panier dans la section huile pour commencer le procédé de friture ;
d) quand le contrôleur (55) établit que la nourriture dans le panier a été frite selon une spécification de l'utilisateur, instruire le moteur de déplacer le panier dans la section essorage ;
e) instruire le ou un moteur de commencer un procédé d'essorage comprenant l'essorage du panier ;
f) surveiller la température de la section essorage (30) et instruire l'élément de chauffage (80) d'augmenter la chaleur produite afin d'augmenter la température de l'huile alimentaire augmentant ainsi la température dans la section essorage (30) ;
g) quand le contrôleur établit qu'il doit être mis fin au procédé d'essorage, stopper le mouvement du panier ; et
h) instruire le couvercle de s'ouvrir, le couvercle étant configuré pour rester fermé au moins durant les étapes b) à g).

2. Dispositif de friture selon la revendication 1, comprenant en outre un deuxième élément de chauffage, ledit élément de chauffage (80) étant disposé dans au moins une section parmi ladite section huile (20) et ladite section essorage (30), et ledit deuxième élément de chauffage étant disposé à l'intérieur d'au moins une section parmi ladite section huile (20) et ladite section essorage (30).

**3.** Dispositif de friture selon la revendication 1, comprenant en outre un moteur d'agitation (65) pour déplacer ladite essoreuse de nourriture à l'intérieur d'au moins une section parmi ladite section huile (20) et ladite section essorage (30).

**4.** Dispositif de friture selon la revendication 1, dans lequel le contrôleur (55) sert à contrôler automatiquement au moins une fonction dudit dispositif de friture.

**5.** Dispositif de friture selon la revendication 1, comprenant en outre :

un filtre à huile (330) comprenant au moins un filtre parmi un filtre à treillis métallique et un filtre fin ; et une pompe (320) en communication de fluide avec ledit filtre (330).

**6.** Dispositif de friture selon la revendication 1, comprenant en outre au moins un système parmi un système pare-feu et un système de ventilation.

FIG.1

FIG.2

FIG.3A

FIG.3B

**FIG.4A**

**FIG.4C**

**FIG.4B**

FIG.4D

FIG.4E

FIG.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5611265 A